# EUROPEAN PATENT APPLICATION

(11) **EP 2 453 271 A1**
(43) Date of publication of application: **16.05.2012**
(21) Application number: 10806008.8
(22) Date of filing: 23.07.2010
(51) Int. Cl.: G02B 6/38

(54) **MINI TYPE DOUBLE-CORE OPTICAL FIBER CONNECTOR**

(30) Priority: 05.08.2009 CN 200910109557
(71) Applicant: Huawei Technologies Co., Ltd., Guangdong 518129 (CN)
(72) Inventor: PENG, Wanquan, Shenzhen Guangdong 518129 (CN); CHEN, Siming, Shenzhen Guangdong 518129 (CN)
(74) Representative: Thun, Clemens
(86) International application number: PCT/CN2010/075414
(87) International publication number: WO 2011/015104

(57) **Abstract**

Embodiments of the present invention relate to a connector, and specifically disclose a mini double-core optical fiber connector. The mini double-core optical fiber connector includes: a shell having a containing body, a ferrule assembly having a pair of ferrules and a pair of ferrule handles, a pair of elastic elements and a tail cover; the containing body of the shell has a first end, a second end and a containing groove extending from the second end to an inner flat bottom, where the first end is opened with two through holes; the containing body of the shell contains the ferrule assembly and the pair of elastic elements, and is connected to the tail cover to form a firm assembly; the ferrule handle includes a first tubular end portion and a second tubular end portion, where the tubular end portion is used to contain a ferrule, and the second tubular end portion is used to contain an optical fiber line; the second tubular end portion is sheathed in an elastic element; the tail cover has a connection portion and a tube portion located at the front end of the connection portion; when the tail cover is connected to the containing body, the tube portion of the tail cover is inserted into the containing groove of the containing body.

## Description

This application claims priority to Chinese Patent Application No. 200910109557.8, filed with the Chinese Patent Office on August, 5 2009 and entitled "MINI DOUBLE-CORE OPTICAL FIBER CONNECTOR", which is incorporated herein by reference in its entirety.

### FIELD OF THE INVENTION

The present invention relates to a connector, and in particular to a mini double-core optical fiber connector.

### BACKGROUND OF THE INVENTION

In recent years, because an optical fiber has advantages such as small diameter, large transmission capacity and fast transmission, using the optical fiber as a transmission link has become the mainstream of the communication industry.

In an optical fiber transmission link, in order to achieve the need of flexible connection between a module, a device and a system, an optical fiber connector is required to complete detachable connection between optical fiber and optical fiber.

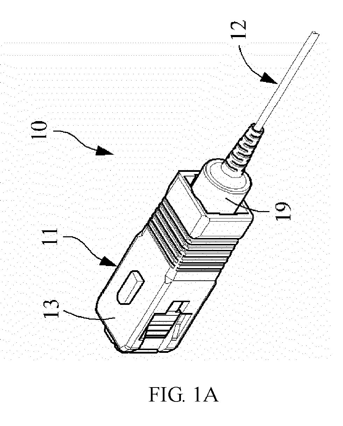

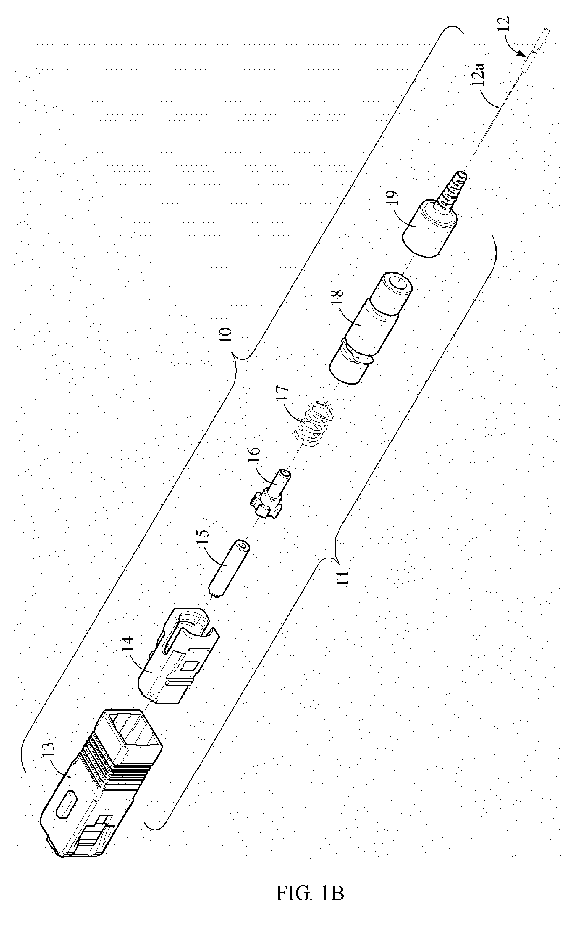

The prior art gives an optical fiber connector; as shown in FIG. 1A and FIG. 1B, a single-core optical fiber connector 10 is formed by a connector element 11 and an optical fiber 12, and the single-core optical connector 10 is combined with an adaptor to form mechanical and electrical connection. The connector element 11 includes a shell body 13, an inner shell body 14, a ferrule 15, a ferrule handle 16, an elastic element 17, a sleeve body 18 and a tail jacket 19, the inner shell body 14 is mounted into the shell body 13, and the inner shell body 14 is used to contain a ferrule 15, a ferrule handle 16, an elastic element 17, a sleeve body 18 and a tail jacket 19. An optical fiber thread 12a of the optical fiber 12 is configured in the ferrule 15, and may serve as a connection core for uncoupling/coupling of an optical fiber system.

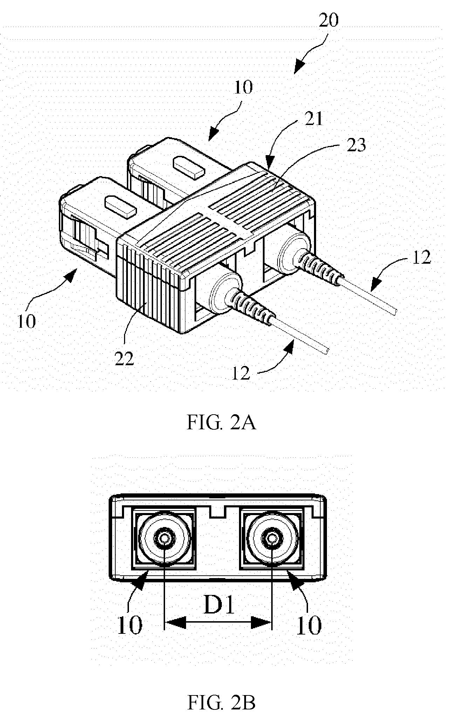

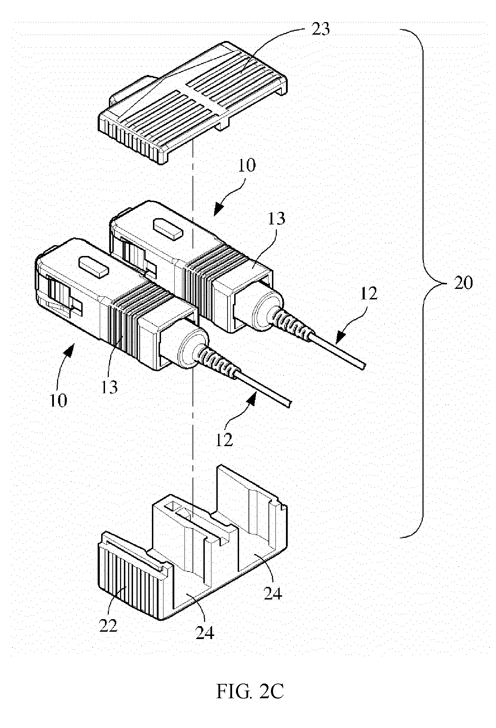

In an optical fiber system using a double-core optical fiber as coupling connection, two single-core optical fiber connectors 10 are required to be commonly mounted in a coupler 21, so as to become a double-core optical fiber connector 20, as shown in FIG. 2A, FIG. 2B and FIG. 2C. The coupler 21 includes a support base 22 and an upper cover 23, and the support base 22 has two groove holes 24 so as to contain shell bodies 13 of the two single-core optical fiber connectors 10.

Parts required by the foregoing double-core optical fiber connector are many, and this double-core optical fiber connector is connected by two single-core optical fiber connectors through the coupler, so that the volume of the double-core optical fiber connector is very large, thus causing the limited loading number of optical fiber systems, assembly inconvenience and an increased cost.

### SUMMARY OF THE INVENTION

The present invention provides a mini double-core optical fiber connector used to contain two optical fiber lines, where the mini double-core optical fiber connector includes:
a shell having a containing body, a ferrule assembly including a pair of ferrules and a pair of ferrule handles, a pair of elastic elements and a tail cover;
the containing body of the shell has a first end, a second end and a containing groove extending from the second end to an inner flat bottom, and the first end is opened with two through holes; the containing body of the shell contains the ferrule assembly and the elastic elements, and is connected to the tail cover to form a firm assembly;
each of the ferrules contains an optical fiber thread of one optical fiber line; the ferrule handle includes a first tubular end portion and a second tubular end portion, the first tubular end portion contains a ferrule, and the second tubular end portion contains an optical fiber line; The second tubular end portion of the ferrule handle is sheathed in the elastic element;
the tail cover has a connection portion and a tube portion located at a front end of the connection portion; when the tail cover is connected to the containing body, the tube portion of the tail cover is inserted into the containing groove of the containing body.

A shell of a containing body contains a pair of elastic elements and a ferrule assembly having a pair of ferrules and a pair of ferrule handles, and then is connected to a tail cover so as to form the mini double-core optical fiber connector according to the embodiment of the present invention. It can be seen that, assembly parts required by the mini double-core optical fiber connector according to the present invention are very few, and further, no connector is required, so that the volume of the double-core optical fiber connector is reduced, thus increasing the loading number of optical fiber systems; meanwhile, because the required assembly parts are very few, the assembly is convenient, and the cost is reduced.

### BRIEF DESCRIPTION OF THE DRAWINGS

To illustrate the technical solutions according to the embodiments of the present invention or in the prior art more clearly, accompanying drawings required for describing the embodiments or the prior art are introduced below briefly. Apparently, the accompanying drawings in the following descriptions are merely some embodiments of the present invention, and persons of ordinary skill in the art may further obtain other drawings according to the accompanying drawings without creative efforts.
FIG 1A is a three-dimensional diagram of a single-core optical fiber connector in the prior art;
FIG 1B is a three-dimensional exploded diagram of the single-core optical fiber connector in the prior art;
FIG 2A is a three-dimensional diagram of a double-core optical fiber connector in the prior art;
FIG 2B is a front view of the double-core optical fiber connector in the prior art;
FIG 2C is a three-dimensional exploded diagram of the double-core optical fiber connector in the prior art;
FIG 3 is a three-dimensional diagram of a mini double-core optical fiber connector according to an embodiment of the present invention;
FIG 4 is a front view of the mini double-core optical fiber connector according to the embodiment of the present invention;
FIG 5 is a three-dimensional exploded diagram of the mini double-core optical fiber connector according to the embodiment of the present invention;
FIG 6 is a transverse three-dimensional cutaway view of a shell of the mini double-core optical fiber connector according to the embodiment of the present invention;
FIG 7 is a three-dimensional diagram of a tail cover of the mini double-core optical fiber connector according to the embodiment of the present invention; and
FIG 8 is a sectional view of the mini double-core optical fiber connector with an optical fiber according to the embodiment of the present invention.

### DETAILED DESCRIPTION OF THE EMBODIMENTS

The technical solutions of the embodiments of the present invention are clearly described in the following with reference to the accompanying drawings in the embodiments of the present invention. Obviously, the embodiments to be described are only part of rather than all of the embodiments of the present invention. All other embodiments obtained by persons of ordinary skill in the art based on the embodiments of the present invention without creative efforts shall fall within the protection scope of the present invention.

The technical solutions of the present invention are described with reference to the accompanying drawings and the embodiments below.

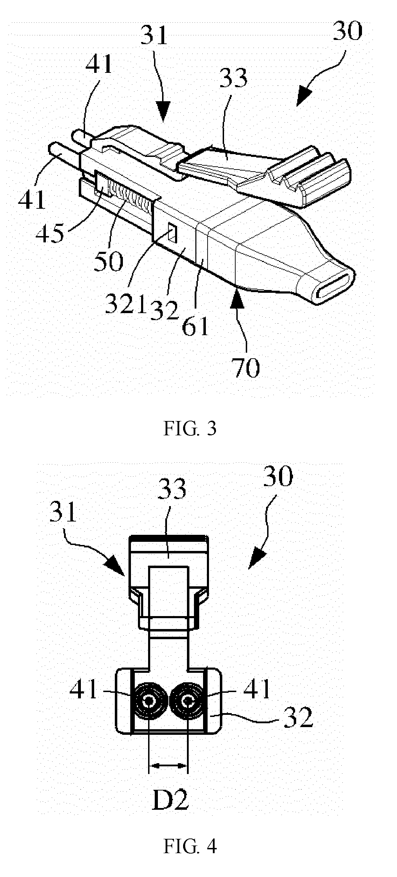

An embodiment of the present invention provides a double-core optical fiber connector 30, which is used to contain two optical fiber lines. A three-dimensional diagram, a front view, and a three-dimensional exploded diagram of the double-core optical fiber connector 30 are as shown in FIG. 3, FIG. 4, and FIG. 5 respectively, and the double-core optical fiber connector 30 includes:
a shell 31 having a containing body 32, a ferrule assembly 40 having a pair of ferrules 41 and a pair of ferrule handles 42, a pair of elastic elements 50 and a tail cover 60.

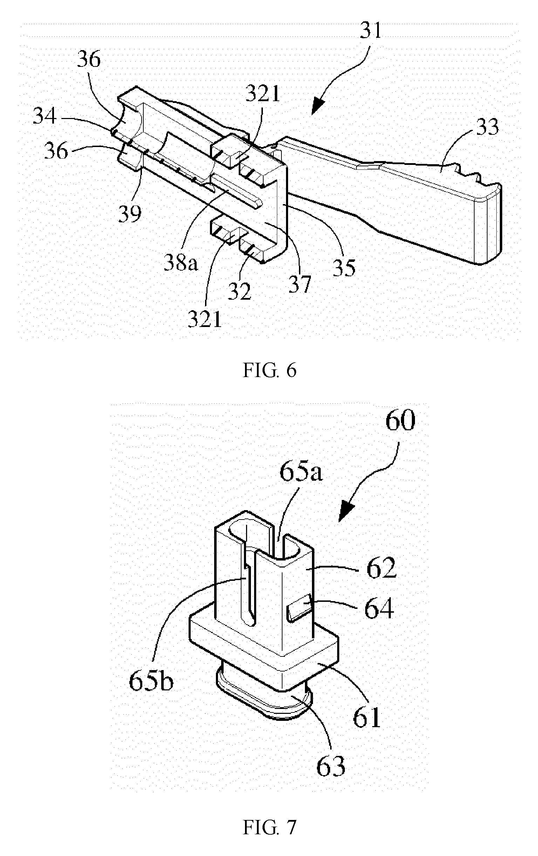

An embodiment of the present invention further provides a shell 31. A transverse three-dimensional cutaway view of the shell 31 is as shown in FIG. 6, the shell 31 has a containing body 32, and the containing body 32 has a first end 34, a second end 35 and a containing groove 37. The containing body 32 is used to contain a ferrule assembly 40 and a pair of elastic elements 50, and is connected to a tail cover 60 to form a firm assembly.

Two through holes 36 are opened on the first end 34 of the containing body, the two through holes 36 may be separate from each other, and each through hole 36 may contain a ferrule 41. The containing groove 37 extends from the second end 35 to an inner flat bottom 39, the inner flat bottom 39 is an inner end face of the first end 34, and the top surface and the bottom surface of the containing groove 37 may respectively have a rib 38a and a rib 38b. Shell bodies at two sides of the containing body 32 each may further have a positioning hole 321. The shell 31 may further include an elastic fastener 33, and the elastic fastener 33 is located at the top end of the containing body 32, and is combined with the containing body 32 integrally. The elastic fastener 33 may be used to be connected to an adaptor of an optical fiber system in a locking manner, and when the mini double-core optical fiber connector 30 is not connected to the connector of the adaptor, the elastic fastener 33 enables the shell 31 to be connected to a cooperative protection cover in a clamping manner, thus preventing an optical fiber thread of the optical fiber from being damaged.

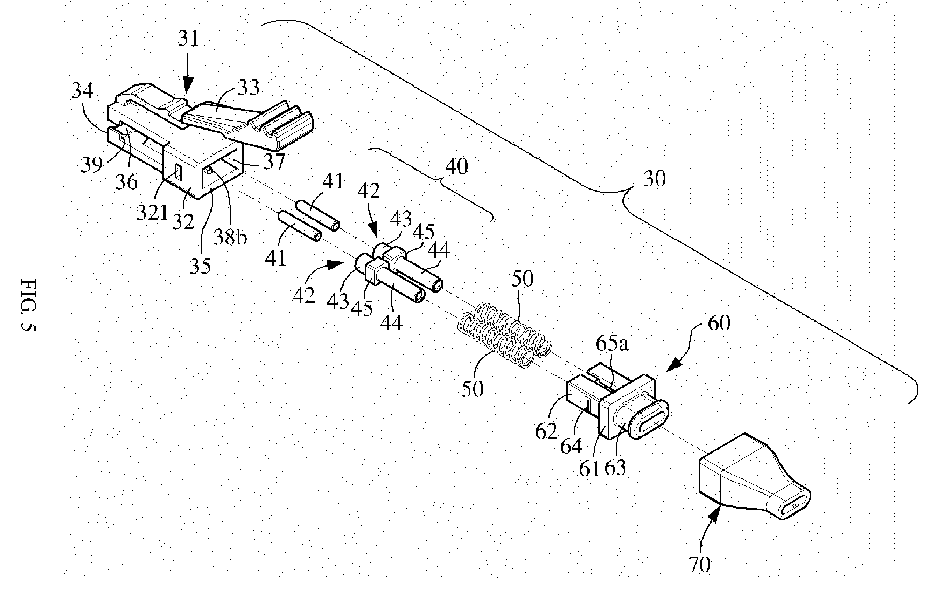

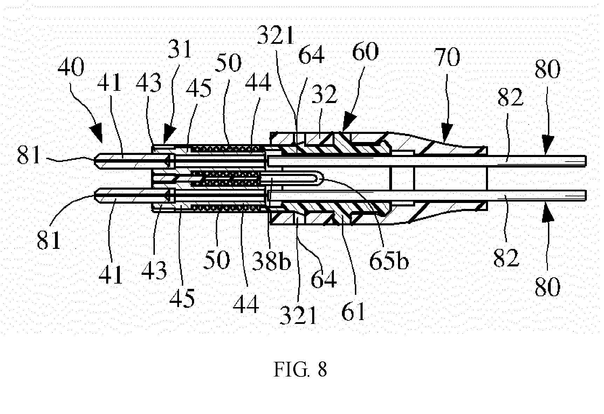

As shown in FIG. 5, the ferrule assembly 40 includes a pair of ferrules 41 and a pair of ferrule handles 42. The ferrule 41 is located at the front end of the ferrule assembly 40, and may contain an optical fiber thread 81 of an optical fiber line 80. Each ferrule handle 42 has a first tubular end portion 43 and a second tubular end portion 44, and the first tubular end portion 43 contains the ferrule 41. The ferrule handle 43 may further include an anti-thrust portion 45, and the anti-thrust portion 45 is located between the first tubular end portion 43 and the second tubular end portion 44. As shown in FIG. 8, when the mini double-core optical fiber connector 31 is specifically connected to the optical fiber 80, the second tubular end portion 44 contains the optical fiber 80, partial length of the ferrule 41 is mounted into the first tubular end portion 43, so that the ferrule 41 and the first tubular end portion 43 become a firm assembly; in a process that the ferrule assembly 40 advances along the direction of the through hole 36 of the containing body 32, the anti-thrust portion 45 contacts the inner flat bottom 39 of the containing body 32, so that the ferrule 41 may stretch out of the through hole 36 of the containing body 32 in the standard length, so as to be coupled to the adaptor of the optical fiber system. It may be understood that, for a double-core optical fiber connector, the anti-thrust portion 45 is not necessary; during design, the outer diameter of the first tubular end portion may be enabled to be less than the outer diameter of the second tubular end portion, so that a contact portion between the first tubular end portion and the second tubular end portion forms a step, and this design can also play a role similar to that of the anti-thrust portion.

The outsides of the second tubular end portions 44 is sheathed in a pair of elastic elements 50 separately, so as to maintain the firm coupling connection between the ferrule 41 and the adaptor of the optical fiber system.

An embodiment of the present invention further provides a tail cover 60. A three-dimensional diagram of the tail cover 60 is as shown in FIG. 7. The tail cover 60 includes a connection portion 61 and a tube portion 62 located at the front end of the connection portion 61. When the mini double-core optical fiber connector 31 is connected to the optical fiber 80, as shown in FIG. 8, the front end face of the tube portion 62 is butted against the tail end of an elastic element 50, and the tube portion 62 may be further used to contain second tubular end portions 44 of a pair of ferrule handles. Further, outer wall surfaces at two sides of the tube portion 62 each have a clamping key 64, and the clamping key 64 corresponds to a positioning hole 321 of the containing body 32; when the tube portion 62 is mounted into the containing groove 37 of the containing body 32, the clamping key 64 is fastened into the positioning hole 321, so that the tail cover 60 and the shell 31 are firmly combined.

Further, as shown in FIG. 7, an upper tube wall and a lower tube wall of the tube portion 62 may further each have a slot 65a and a slot 65b, which correspond to the rib 38a and the rib 38b of the containing body 32 respectively; the width of the slot 65a is larger than the width of the rib 38a, the width of the slot 65b is larger than the width of the rib 38b, and when the tube portion 62 is mounted into the containing groove 37 of the containing body 32, the rib 38a is located in the slot 65a, and the rib 38b is located in the slot 65b. When a lateral pulling force is applied onto the optical fiber 80, because the slots 65a and 65b are respectively obstructed by the ribs 38a and 38b, an offset generated when the tube portion 62 is inward deformed may be limited, so that the combination between the tail cover 60 and the containing body 32 is further firmed.

Further, the tail cover 60 may further include a flange portion 63, and the flange portion 63 is located at the rear end of the connection portion 61.

As shown in FIG. 5, the mini double-core optical fiber connector 31 according to this embodiment may further include a tail jacket 70. The flange portion 63 of the tail cover 60 is sheathed in the tail jacket 70, so that the tail cover 60 and the tail jacket 70 are combined, and the connection portion 61 is clamped between the containing body 32 and the tail jacket 70. The tail jacket 70 may protect the optical fiber 80 from being excessively bent, so as to ensure stability of optical fiber transmission characteristics.

In this embodiment, the containing body 32 may be a rectangular containing body or a circular containing body, and accordingly, the tube portion 62 of the tail cover 60 is also a rectangular tube portion or a circular tube portion. In this application, the shapes of the containing body 32 and the tube portion 62 of the tail cover 60 are not specifically limited, as long as the two correspond to each other, and the containing body and the tail cover can form a firm assembly when the containing body and the tail cover are connected.

The containing body 32 of the shell 31 contains the ferrule assembly 40 and a pair of elastic element 50 and then is combined with the tail cover 60 so as to form the mini double-core optical fiber connector 30 according to the embodiment of the present invention. It can be seen that, assembly parts required by the mini-core optical fiber connector 30 according to the embodiment of the present invention are few, and because the containing body 32 may be used to contain two ferrules 41, the center distance between the two ferrules 41 is reduced, thus greatly reducing the volume of the double-core optical fiber connector; in the case that a same telecommunication set top box is used, compared with an existing double-core optical fiber connector, the mini double-core optical fiber connector according to the present invention may increase the loading number of optical fiber systems. Furthermore, because the used assembly parts are few, the assembly is more convenient, and the cost is lower.

Finally, it should be noted that the foregoing embodiments are merely provided for describing the technical solutions of the present invention, but not intended to limit the present invention. Although the present invention has been described in detail with reference to the foregoing embodiments, it should be understood by persons of ordinary skill in the art that, modifications may still be made to the technical solutions described in the foregoing embodiments, or equivalent replacements may still be made to some technical features of the technical solutions; however, these modifications or replacements do not make the nature of the technical solutions depart from the spirit and scope of the technical solutions according to the embodiments of the present invention.

## Claims

1. A mini double-core optical fiber connector used to contain two optical fiber lines, comprising:
a shell having a containing body, a ferrule assembly comprising a pair of ferrules and a pair of ferrule handles, a pair of elastic elements and a tail cover, wherein
the containing body of the shell has a first end, a second end and a containing groove extending from the second end to an inner flat bottom, and the first end is opened with two through holes; the containing body of the shell contains the ferrule assembly and the pair of elastic elements, and is connected to the tail cover to form a firm assembly;
each of the ferrules contains an optical fiber thread of one optical fiber line; the ferrule handle comprises a first tubular end portion and a second tubular end portion, the first tubular end portion contains a ferrule, and the second tubular end portion contains an optical fiber line; the second tubular end portion of the ferrule handle is sheathed in the elastic element;
the tail cover has a connection portion and a tube portion located at a front end of the connection portion; when the tail cover is connected to the containing body, the tube portion of the tail cover is mounted into the containing groove of the containing body.

2. The mini double-core optical fiber connector according to claim 1, wherein the shell comprises an elastic fastener, which is located at a top end of the containing body, and is combined with the containing body integrally.

3. The mini double-core optical fiber connector according to claim 1, wherein a top surface and a bottom surface of the containing body each have a rib; an upper tube wall and a lower tube wall of the tube portion of the tail cover each have a slot, which corresponds to the rib that the top surface and the bottom surface of the containing body each have.

4. The mini double-core optical fiber connector according to claim 1, wherein two sides of the containing body are opened with positioning holes.

5. The mini double-core optical fiber connector according to claim 4, wherein outer wall surfaces at two sides of the tube portion of the tail cover have clamping keys, which correspond to the positioning holes at the two sides of the containing body respectively.

6. The mini double-core optical fiber connector according to claim 1, wherein the ferrule handle has an anti-thrust portion, and the anti-thrust portion is located between the first tubular end portion and the second tubular end portion, and contacts the inner flat bottom of the containing body.

7. The mini double-core optical fiber connector according to any one of claims 1 to 6, wherein the tail cover further has a flange portion, and the flange portion is located at a rear end of the connection portion.

8. The mini double-core optical fiber connector according to claim 7, further comprising a tail jacket, wherein the tail jacket is connected to the flange portion of the tail cover.
